# EUROPEAN PATENT APPLICATION

(11) **EP 4 712 689 A1**
(43) Date of publication of application: **18.03.2026**
(21) Application number: 24199672.7
(22) Date of filing: 11.09.2024
(51) Int. Cl.: H05B 3/00

(54) **TEMPERATURE SENSOR INTEGRATION IN A TUBULAR HEATING ELEMENT**

(71) Applicant: Bleckmann GmbH & Co. KG, 5112 Lamprechtshausen (AT)
(72) Inventor: Gojkic, Mladen, 5112 Lamprechtshausen (AT); Höfer, Johann, 5112 Lamprechtshausen (AT); Schurbaum, Lucas, 5112 Lamprechtshausen (AT); Wäckerle, Florian, 5112 Lamprechtshausen (AT); Steger, Bernhard, 5112 Lamprechtshausen (AT); Ullrich, Michael, 5112 Lamprechtshausen (AT)
(74) Representative: Eisenführ Speiser

(57) **Abstract**

The present application relates to tubular heaters, an aspect of which comprises:
a tubular casing enclosing a heated portion and at least a first connection portion adjacent the heated portion;
an electrical heating element disposed within the heated portion of the tubular casing;
a power transmitting element extending between the heated portion and the first connection portion for transmitting electrical power from an external power source to the electrical heating element;
a sensor assembly disposed within the first connection portion of the tubular casing and comprising at least a first temperature sensor; and
a heat conducting element provided in thermal contact with the first temperature sensor and extending from the first connection portion into the heated portion, wherein the heat conducting element is electrically insulated from the electrical heating element and the power transmitting element.

## Description

### FIELD

The application relates to a tubular heater for heating fluid in a household appliance; to a heated pump assembly for use in a household appliance; to a household appliance comprising such a tubular heater or such a heated pump assembly; and to a method for heating a fluid using a tubular heater.

### BACKGROUND

It is known to apply tubular heaters for heating fluids, such as water or water-based solutions, in household appliances, such as washing machines or dishwashers. For safe operation of household appliance, it is necessary to prevent the fluid and/or the tubular heating element from overheating.

The measurement of a temperature of a tubular heater using a temperature sensor of various kinds (TC, NTC, PTC, etc.) via thermal coupling to various components that are installed in tubular heaters in washing machines or dishwashers and separated from the outside environment or the medium to be heated by the pipe jacket is the state of the art and is described, for example, in EP 0 660 644 B1 and EP 1 081 986 B1.

However, there remains a need for providing more accurate and/or versatile temperature measurements.

### SUMMARY

The disclosed technology pertains to tubular heaters for heating fluid in a household appliance, including but not limited to dishwashers and washing machines, as well as methods for operating and assemblies comprising such tubular heaters.

In an aspect of the disclosed technology, a tubular heater for heating fluid in a household appliance is provided. The tubular heater comprises:
a tubular casing enclosing a heated portion and at least a first connection portion adjacent the heated portion;
an electrical heating element disposed within the heated portion of the tubular casing;
a power transmitting element extending between the heated portion and the first connection portion for transmitting electrical power from an external power source to the electrical heating element;
a sensor assembly disposed within the first connection portion of the tubular casing and comprising at least a first temperature sensor; and
a heat conducting element provided in thermal contact with the first temperature sensor and extending from the first connection portion into the heated portion, wherein the heat conducting element is electrically insulated from the electrical heating element and the power transmitting element.

By providing a heat conducting element that is electrically insulated from the electrical heating element and the power transmitting element, the heat conducting element transmits no electrical power, which inadvertently would lead to resistance losses and therefore additional heat produced within the heat conducting element. In the absence of such additional heat produced within the heat conducting element, a first temperature reading provided by the first temperature sensor more accurately reflects the true temperature of the electrical heating element. Various additional or alternative configurations for further improving the accuracy of the first temperature reading are disclosed herein below.

Electrically insulating the heat conducting element from the electrical heating element and the power transmitting element can also advantageously provide for an electrical insulation of any circuitry of the sensor assembly comprising the first temperature sensor. DIN EN 60335 sets standards for the safety of household and similar electrical appliances and is mandatory in many relevant jurisdictions. According to section 29.2 of DIN EN 60335, electrically insulating sensor circuitry from the power transmitting element allows to make use of smaller creepage distances relative to the tubular casing, as a reduced voltage can be assumed, advantageously enabling for a more compact design.

Other aspects described elsewhere herein allow to dispense with a heat conducting element, while providing similar characteristics. In particular, the sensor assembly may comprise a circuit board in the form of a flexible foil. Preferably, a portion of the flexible foil carrying the first temperature sensor is in direct contact with the power transmitting element. In such implementations, the first temperature reading of the first temperature sensor is indicative of the temperature of the power transmitting element, which can be used as a surrogate for the temperature of the electrical heating element.

In preferred implementations of any of the aforementioned aspects of the tubular heater, the sensor assembly comprise a second temperature sensor configured to provide a temperature second reading, which is indicative of a temperature of a fluid surrounding the tubular heater. Such implementations may allow to simultaneously determine the temperature of the surrounding fluid in addition to the temperature of the electrical heating element. Various additional or alternative configurations for further improving the accuracy of the second temperature reading are disclosed herein below.

In a further aspect of the disclosed technology, a heated pump assembly is provided, the assembly comprising any kind of tubular heater as described herein. In another aspect of the disclosed technology, a household appliance is provided, such as a washing machine or a dishwasher. The household appliance advantageously comprises any kind of tubular heater as described herein, or any kind of heated pump assembly as described herein.

The above summary of the disclosed technology is not intended to be limiting. Other alternative or additional aspects of the disclosed technology are described in the following with reference to the attached drawings.

### BRIEF DESCRIPTION OF THE DRAWINGS

In the following, further aspects, implementations and examples of the disclosed technology are described in conjunction with the attached drawings. Thereby, the expressions left, right, below and above are referred to the drawings in an orientation of the drawings which allows the normal reading of the reference numbers, but do not necessarily define a position or orientation of the features or components with respect to manufacturing or operation, unless explicitly stated. The skilled reader will immediately recognize that the attached drawings are derived from CAD models, and as such, are to scale. The combinations of absolute and relative dimensions reproduced in the attached drawings are representative of the depicted particular aspects, implementations and examples, and as such are not limiting or essential for the disclosed technology.
- Fig. 1a: shows an implementation of a tubular heater in a top view;
- Fig. 1b: shows the implementation of Fig. 1a in a cross-sectional view;
- Fig. 2: provides a detail view of a portion of an implementation of a tubular heater with some elements removed to illustrate possible geometries for a heat conducting element and a power transmitting element;
- Fig. 3: shows a portion of an implementation of a tubular heater in a cross-sectional view;
- Fig. 4: illustrates elements of an implementation of a tubular heater in which a sensor assembly is encapsulated in an electrically insulating material;
- Fig. 5: provides a cross-sectional view of another implementation of a tubular heater with a sensor assembly having a partially split circuit board;
- Fig. 6a: is a perspective view of a partial cross-section of another implementation of a tubular heater, illustrating different portions of a sensor assembly encapsulated in different electrically insulating materials;
- Fig. 6b: is a top view of a partial cross-section of the implementation of Fig. 6a;
- Fig. 7: shows a top view of a cross-section of another implementation of a tubular heater having a partially split circuit board at least partially covered by different electrically insulating materials;
- Fig. 8: is a cross-sectional view of another implementation of a tubular heater, particularly illustrating different positions of first and second temperature sensors;
- Fig. 9a: provides a cross-sectional view of another implementation of a tubular heater, particularly illustrating different positions of first and second temperature sensors;
- Fig. 9b: provides a perspective view of the implementation of Fig. 9a;
- Fig. 10: is a perspective view of an implementation of a partially split circuit board;
- Fig. 11a: provides an exploded view of another implementation of a split circuit board encapsulated in electrically insulating material;
- Fig. 11b: provides a perspective view of the implementation of Fig. 11a;
- Fig. 11c: provides a perspective view of a detail of the implementation of Fig. 11a;
- Fig. 12a: show a specific implementation of a heated pump;
- Fig. 12b: illustrates the implementation of Fig. 12a with some elements removed;
- Fig. 13a: is a perspective view of another implementation of a sensor assembly with some elements removed;
- Fig. 13b: is a cross-sectional view of the implementation of Fig. 13a;
- Fig. 14a: is a perspective view of a partial cross section of another implementation of a tubular heater; and
- Fig. 14b: is another perspective cross-sectional view of the implementation of Fig. 14a.

### DETAILED DESCRIPTION OF SPECIFIC EXAMPLES

In the following sections, further aspects, implementations and examples of the disclosed technology are described in conjunction with the attached drawings. Titles are provided for each of the following sections to enhance readability. The titles are not intended to be limiting for the disclosed technology. It is understood from the technical content of the following description that aspects, implementations and examples described in different sections are readily combinable, even where such a combination is not explicitly mentioned. Moreover, even though some elements are shown in combination in the attached drawings, these elements can generally also be present isolated from one another in other implementations. Insofar the following description suggests a link between different elements shown in combination in the attached drawings, such link is not to be considered inextricable unless an indispensable technical requirement exists for such a combination.

It has to be understood that wherever the present application uses the term "at least partially" to describe a feature, configurations in which the feature is fulfilled entirely or substantially entirely are also encompassed.

### Tubular heaters

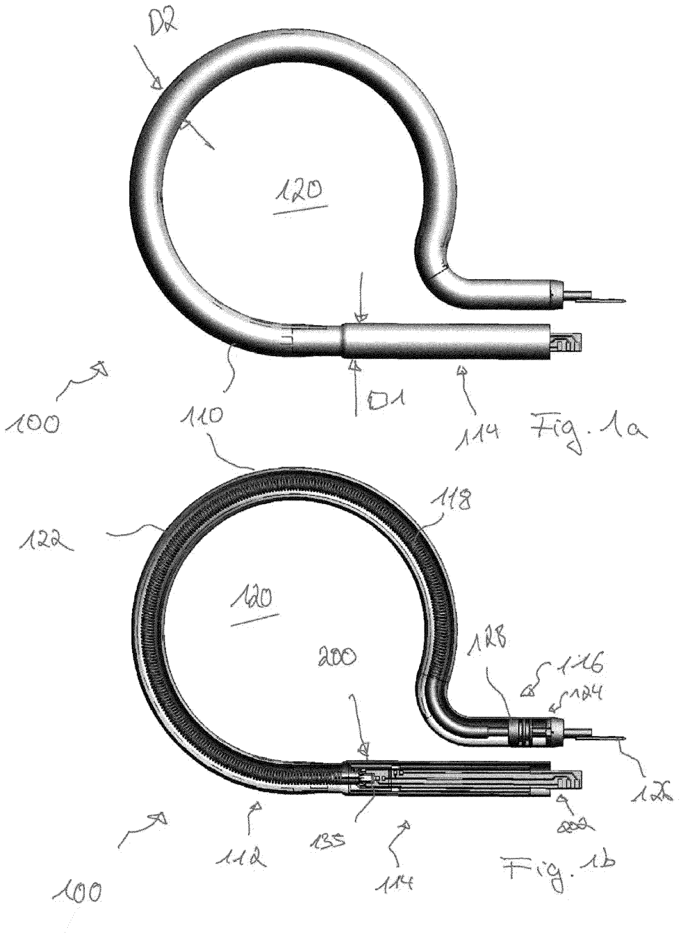

Specific aspects and implementations of tubular heaters according to the disclosed technology are detailed hereafter with reference to Figs. 1a and 1b, which show a particular configuration of a tubular heater 100 in top view (Fig. 1a) and in a cross sectional view from the same perspective (Fig. 1b). As will become clearer from the following description, tubular heaters according to the disclosed technology are not limited to the specific examples depicted in Figs. 1a and 1b. In particular, it is not necessary that tubular heaters according to the disclosed technology comprise all elements depicted in or described in conjunction with Figs. 1a and 1b, or that such elements - if present - are provided in the exact configuration and/or dimensions depicted in or described in conjunction with Figs. 1a and 1b.

A tubular heater according to the disclosed technology, such as heater 100 shown in Figs. 1a and 1b, comprises of a tubular casing 110 extending enclosing a heated portion 112 and at least a first connection portion 114 adjacent the heated portion 112. In some implementations, such as shown in Figs. 1a and 1b, heater 110 further comprises an optional second connection portion 116, so that in the depicted specific implementation, heated portion 112 extends between first connection portion 114 and second connection portion 116.

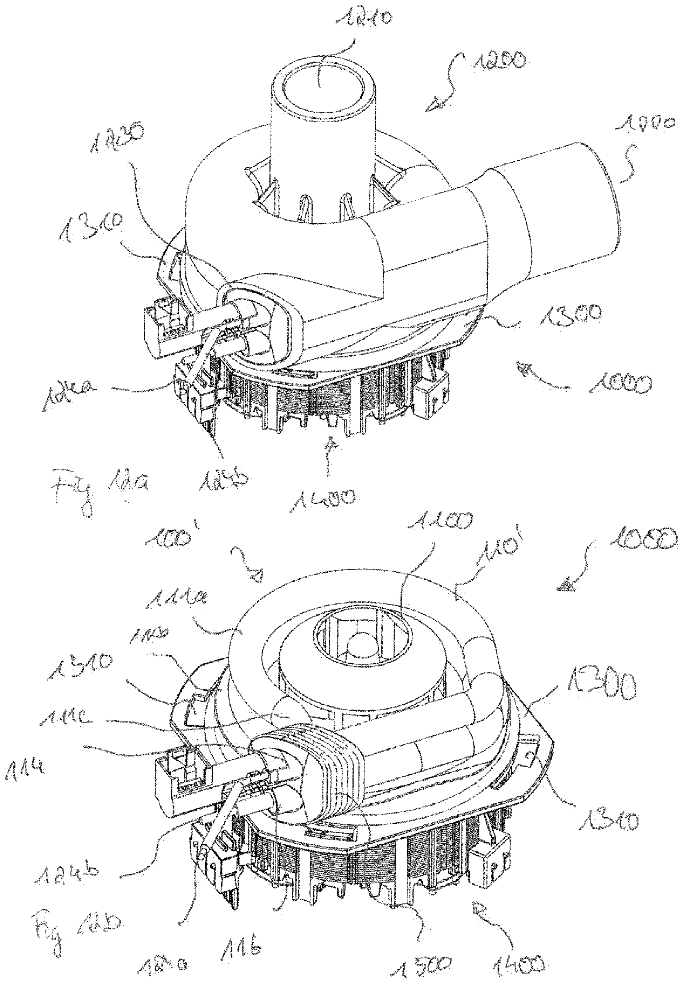

Tubular casing 110 is preferably made from metal (such as aluminium, stainless steel, or steel with a corrosion resistant surface), and can have a circular or other cross-section. Other suitable metals for forming tubular casing 110 include steel (preferably corrosion resistant steels, such as austenite steel or ferritic steel), nickel alloys, and titanium alloys. Tubular casing 110 may optionally comprise a coating, such as a compound coating, which can preferably be deposited on any of the aforementioned suitable metals. In some implementations, such as shown in Figs. 1a and 1b, tubular casing 110 is optionally bent into a loop-like structure, enclosing an inner portion 120, which can be beneficial when employing tubular heater 100 in a heated pump, such heated pump 1000, shown in Figs. 12a and 12b with a further implementation of a tubular heater 100'. In such implementations, a pumping element 1100 (such as a turbo pump, e.g. a radial pump) of heated pump 1000 can advantageously be positioned within inner portion 120, with tubular heater 100' surrounding pumping element 1100. In other implementations, tubular casing 110 has a different geometry, including but not limited to a straight configuration and a helical configuration.

Tubular casing 110 can have a constant diameter along its length, or alternatively and as depicted in Figs. 1a and 1b, can have portions of different diameter. For example, as shown in Figs. 1a and 1b, first connection portion 114 can have a diameter D1 larger than a diameter D2 of heated portion 112. This can advantageously provide an increased volume for receiving a sensor assembly 200 in first connection portion 114 as further detailed below.

Heated portion 112 is a portion of tubular casing 110 which houses an electrical heating element 118. In some implementations, such as shown in Figs. 1a and 1b, heating element 118 is a resistive heating element, having a coil portion spirally extending around a central longitudinal axis of tubular casing 110. However, other electrical heating elements known in the art can be employed without departing from the concepts of the disclosed technology. Preferably, as shown in Fig. 1b, electrical heating element 118 is embedded in a filling mass 122 which electrically insulates heating element 118 and tubular casing 110. A particularly suitable material for filling mass 122 is magnesium oxide (MgO) due to its high temperature resistance, excellent electrical insulation properties, and good thermal conductivity.

First connection portion 114 is a portion of tubular casing 110 located at a first, open end thereof, which allows to connect electrical heating element 118 to an external power supply. In the depicted implementation, first connection portion 114 houses a first connector (not shown in Figs. 1a, 1b), and second connection portion 116 at a second, open end of tubular casing 110 houses a second connector 124. In other implementations, a second end of tubular casing 110 is closed, and heating element 118 loops back to the open first, end of casing 110, such that both electrical connectors are located at or in the first connection portion 114. Second connector 124 established an electrical connection between a port 126 for connecting the external power supply, and the electrical heating element 118. Preferably, an insulating portion 128 is provided, separating heated portion 110 from second connection portion 116. Insulating portion 128 can for example comprise a ceramic material. As further detailed hereafter, first connection portion 114 can be configured similarly.

As already mentioned, first connection portion 114 houses sensor assembly 200 which will be further detailed below. Different sensor assemblies, including but not limited to those discussed elsewhere herein, can be employed in implementations of tubular heater 100. In addition to providing means for establishing an electrical connection between heating element 118 and the external power supply, first connection portion 114 also provides means for establishing a connection between circuitry of sensor assembly 200, and control circuitry of a household appliance. Such means can in particular be provided in the form of contact pins 202 as shown in Figs. 1a and 1b.

### Sensor assemblies

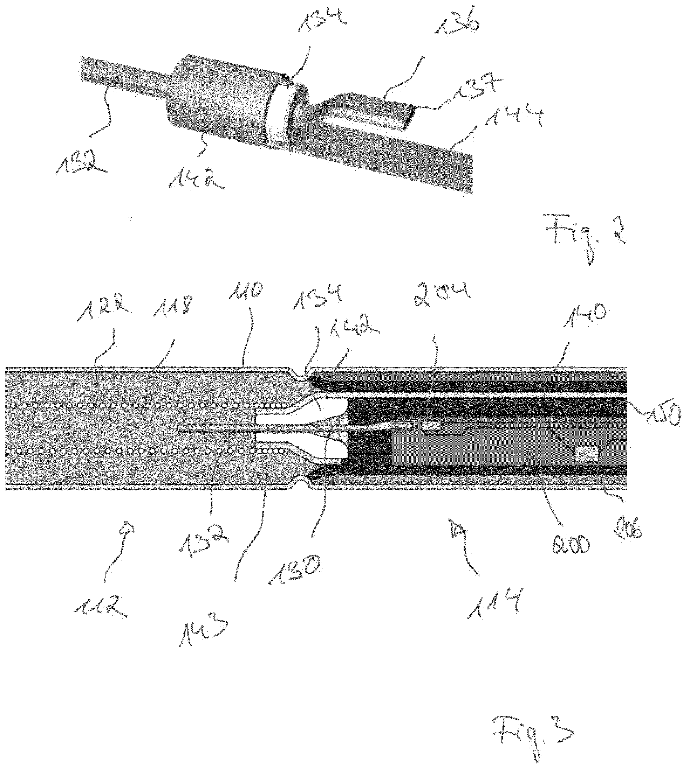

Specific aspects and implementations of sensor assemblies according to the disclosed technology are detailed hereafter with reference to Figs. 2 to 11c, and Figs. 13a to 14b. As will become clearer from the following description, sensor assemblies according to the disclosed technology are not limited to the specific examples depicted in Figs. 2 to 11c, and Figs. 13a to 14b. In particular, it is not necessary that sensor assemblies according to the disclosed technology comprise all elements depicted in or described in conjunction with Figs. 2 to 11c, and Figs. 13a to 14b, or that such elements - if present - are provided in the exact configuration and/or dimensions depicted in or described in conjunction with Figs. 2 to 11c, and Figs. 13a to 14b.

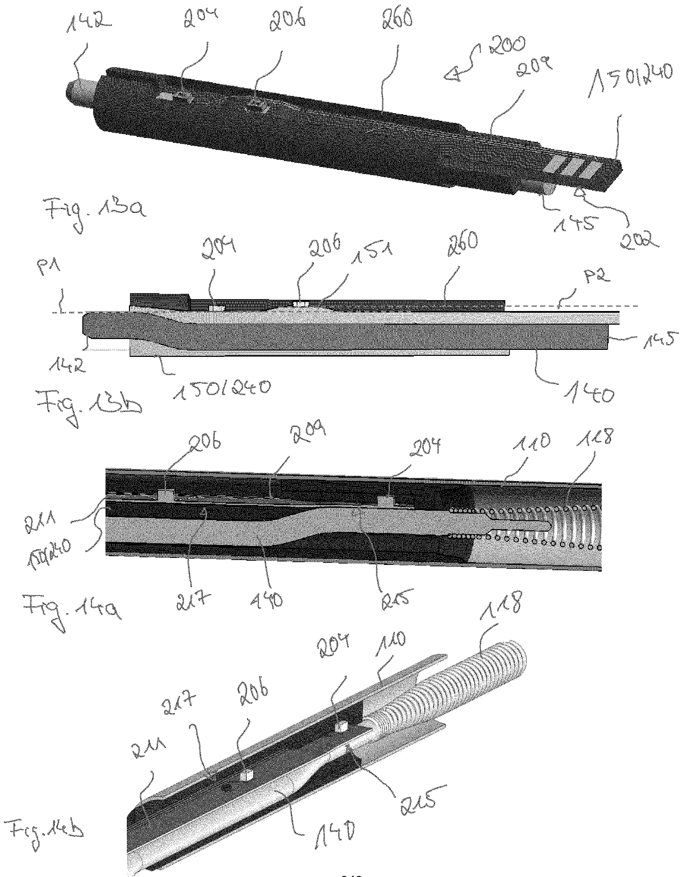

Fig. 3 provides a cross sectional view including sections of heated portion 112 and first connection portion 114 of a specific implementation of a tubular heater according to the disclosed technology. Sensor assembly 200 in this specific implementation comprises a first temperature sensor 204, and an optional second temperature sensor 206. As further detailed hereafter, first temperature sensor 204 is arranged to provide a first temperature reading indicative of a temperature of electrical heating element 118, and optional second temperature sensor 206 is arranged to provide a second temperature reading indicative of a temperature of a medium (such as a fluid, preferably comprising water, including but not limited to an aqueous washing solution) at least partially surrounding tubular heater 100. Preferably, sensor assembly 200 comprises a printed circuit board 201 (PCB), on which first temperature sensor 204 and optional second temperature sensor 206 are provided. In other configurations, as will be exemplified herein below with reference to Figs. 13a and 13b, the sensor assembly need not comprise a circuit board. In yet other configurations, exemplified herein below with reference to Figs. 14a and 14b, the sensor assembly comprises circuit board which is not necessarily a rigid PCB.

In some configurations, board 201 is a PCB according to NEMA (National Electrical Manufacturers Association) standard FR4. In some configurations, board 201 has a thickness of around 1.5mm. Such a thickness can be beneficial as it enables to directly connect a plug of ZVEI (Verband der Elektro- und Digitalindustrie e.V.) standard RAST ("Raster-Anschluss-Steck-Technik"). However, other thicknesses are possible.

In some configurations, board 201 is an IMS (Insulated Metallic Substrate) board, for example using an aluminum substrate. An advantage of IMS boards is that the metallic substrate, such as aluminum, can serve as a heat conducting element. In some configurations, heat conducting element 130 detailed hereafter may thus be provided in the form of an integral portion of board 201.

First temperature sensor 204 and optional second temperature sensor 206 can take various forms, including but not limited to NTC (negative temperature coefficient) and PTC (positive temperature coefficient) thermistors, as well as thermocouples (TC). First and second sensors 204, 206 need not necessarily be of the same type, and NTCs, PTCs and TCs can be mixed and matched depending on the circumstances. In the depicted specific implementations, both sensors 204, 206 are NTCs.

As can be inferred e.g. from Fig. 3, first temperature sensor 204 is positioned within connection portion 114, and thus distanced from electrical heating element 118. To enable a useful temperature reading indicative of the temperature of heating element 118, a heat conducting element 130 is provided which extends between heated portion 112 and first connection portion 114. Heat conducting element 130 provides efficient heat transfer from heating element 118 to sensor 204. It can be connected directly to the electrical potential of sensor 204 (as shown e.g. in Fig 3) or be electrically insulated and transfer heat indirectly via the circuit board (not shown). In the specific implementation shown in Fig. 1b, thermal contact between sensor 204 and heat conducting element 130 is optionally provided by a heat conducting portion 135 on the circuit board, with which sensor 204 and element 130 are both in direct contact. Such a portion 135 can for example be provided by copper or a copper alloy deposited on the board.

Heat conducting element 130 should be made of metal, the specific shape and geometry of which can vary. Suitable materials for heat conducting element 130 can have a thermal conductivity of at least 5 W/(m*K), at least 10 W/(m*K), at least 15 W/(m*K), or at least 20 W/(m*K). Metals are particularly advantageous conductors of heat, and thus a suitable choice for heat conducting element 130. In some implementations, the thermal conductivity of heat conducting element 130 is at least 50 W/(m*K), at least 55 W/(m*K), at least 60 W/(m*K), at least 65 W/(m*K), at least 70 W/(m*K), at least 75 W/(m*K), at least 80 W/(m*K), at least 85 W/(m*K), at least 90 W/(m*K), at least 95 W/(m*K), at least 100 W/(m*K), at least 150 W/(m*K), at least 200 W/(m*K), at least 250 W/(m*K), at least 300 W/(m*K), or at least 350 W/(m*K). In some implementations, heat conducting element 130 is formed from copper or an alloy or other material composition comprising copper. Suitable copper alloys include but are not limited to bronze and brass. Copper has a thermal conductivity of around 400 W/(m*K) and is thus particularly suitable for conducting heat or for forming alloys suitable for conducting heat. In some implementations, heat conducting element 130 is formed from aluminium or an alloy or other material composition comprising aluminium. With a thermal conductivity of around 235 W/(m*K) is still an excellent conductor of heat, and may be advantageous due to its lower cost than more thermally conductive materials, such as copper or alloys comprising copper. In some implementations, heat conducting element 130 is formed from steel or an alloy or other material composition comprising steel. With the thermal conductivity of different steel alloys ranging between 15 and 65 W/(m*K), steel is still a useful conductor of heat, and may be advantageous due to its lower cost than more thermally conductive materials such as aluminium or copper, or their alloys. In other implementations, heat conducting element 130 is formed from silver or an alloy or other material composition comprising silver. Silver has a thermal conductivity of around 430 W/(m*K) and is thus an even better thermal conductor than copper. Other suitable materials, including non-metallic materials such as carbon based materials, can also be employed.

To prevent spark over from heating element 118 to the circuit board, heat conducting element 130 is electrically insulated from heating element 118. To this end, it is sufficient that in some configurations, a portion 132 of heat conducting element 130 located in heated portion 112 is embedded within filling mass 122 at a distance from heating element 118. Such configurations can be beneficial in that they allow to arrange sensor 204 closer to the electrical heating element 118 without having to use an additional insulating layer, reducing the temperature gradient occurring over heat conducting element 130. As a result, less heat is conducted into connection portion 114 as a whole, while still allowing an accurate temperature reading. Also, more installation space remains free in connection portion 114 for power transmitting element 140 and sensor assembly 200. Moreover, a time constant implemented in an evaluation circuit (not shown) for determining the temperature of the heating element 118 based on the temperature reading of sensor 204, can be significantly reduced due to smaller thermal mass compared to the state of the art. A further advantage of such configurations is that limescale deposits can be detected more accurately. Moreover, local hotspots in an area where power transmitting element 140 is connected to heating element 118 (such as by welding) can be identified, including hotspots caused by an electrical flashover from heating element 118 to heat conducting element 130.

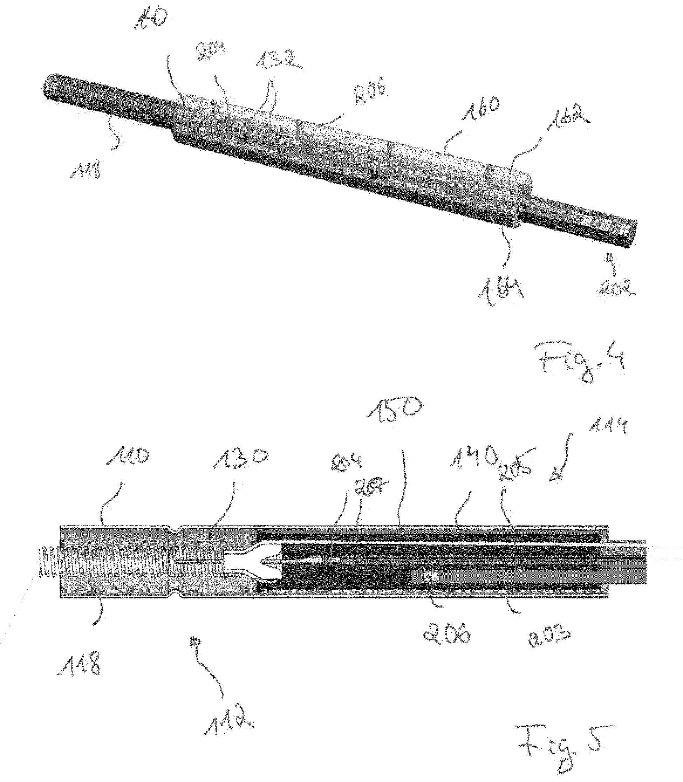

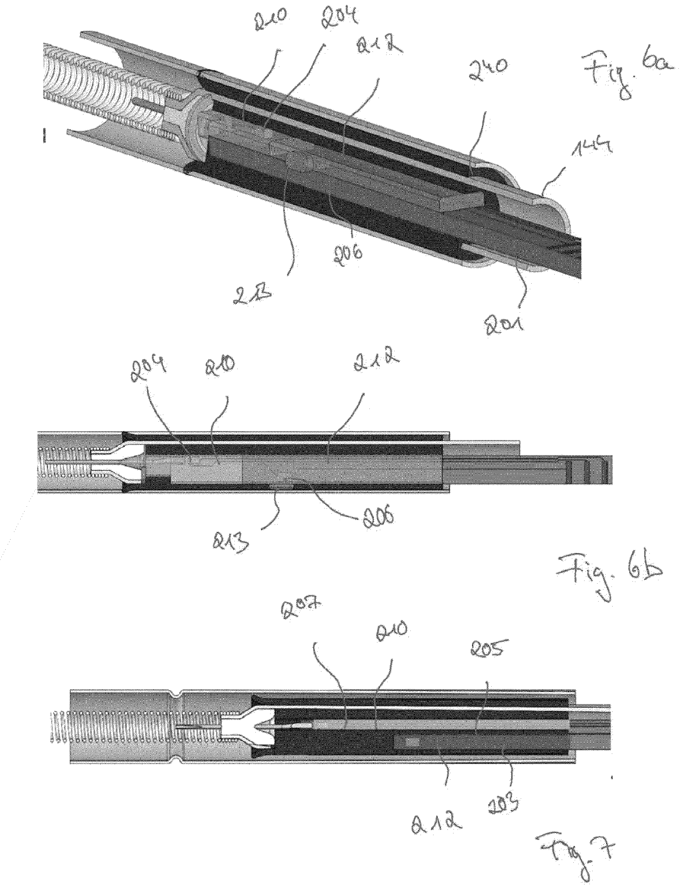

In some configurations, power transmitting element 140 is optionally encapsulated in temperature resistant and electrically insulating material 150 (elsewhere herein also referred to as third electrically insulating material), such as polybutylene terephthalate (PBT), or other suitable materials, including but not limited to other polymers as well as materials suitable for the first and/or second electrically insulating materials described elsewhere herein. In some implementations, material 150 is a polyamide (PA), including but not limited to Nylon, such as PA6.6. Polymers, including the aforementioned ones, are particularly advantageous for their suitability for injection molding. In some implementations, shown e.g. in Fig. 4, material 150 can also form a capsule 160 surrounding portions or the entirety of sensor assembly 200. In some implementations, such as shown in Fig. 4, capsule 160 can comprise two halves, a cover portion 162 and a carrier portion 164. In implementations comprising third material 150, the same can advantageously provide additional electrical insulation between power transmitting element 140 and sensor assembly 200. This aspect is also illustrated for example in Figs. 6a, 8 and 9a, which depict third material 240 disposed between power transmitting element 140 and sensor assembly 200.

As further detailed below, various optional and combinable measures can be taken to minimize thermal conductivity between first sensor 204 and second sensor 206, to increase the accuracy with which their temperature readings resemble the temperatures to be determined. For example, such as shown in Fig. 4, one or more portions of a first thermally insulating material 132 can be provided between the first sensor 204 and second sensor 206. In some implementations, such as shown in Fig. 4, thermally insulating material 132 is injected into one or more respective pre-formed cavities in cover portion 164 of capsule 160. Alternatively or additionally, such as shown in Fig. 5, circuit board 201 may comprise a first board portion 207 on which first sensor 204 is positioned, and a second board portion 203 on which second sensor 206 is positioned. First and second board portions 207, 203 are at least partially separated by a cut-out or slit 205, thereby reducing heat transfer between first and second sensors 204, 206. When present, slit 205 is advantageously filled by material 150 encapsulating sensor assembly 200, forming a wall portion separating first and second board portions 207, 203. Preferably, slit 205 does not extend over the entire length of board 201. In other words, in such implementations, first board portion 207 and second board portion 203 are connected by and extend from a base portion of board 201. Put yet differently, in such implementations, board 201 is a single continuous component, of which first and second board portions 207, 203 are integral sections. In yet other implementations, first and second board portions 207, 203 are provided in the form of separate boards (not depicted), i.e. are fully separated by slit 205. In some implementations, such as shown in Fig. 5, second board portion 203 is optionally shorter than first board portion 207, advantageously increasing the amount of insulating material 150 separating second sensor 204 from heated portion 112.

In some implementations, such as shown in Fig. 3, portion 132 of heat conducting element 130 is positioned radially within the coil like structure of heating element 118, preferably at its center. Such positioning advantageously places heat conducting element 130 in the potentially hottest region of heated portion 112. Other implementations are contemplated and will be detailed further below. Heat conducting element 130 can extend over the entire length of the coiled structure of heating element 118 (not shown), or extend only along a portion of heating element 118 as shown e.g. in Fig. 3. In other implementations, heat conducting element 130 extends shorter than shown in Fig. 3.

An optional power transmitting element 140 is also provided, extending between heated portion 112 and first connection portion 114 for transmitting electrical power from an external power source to electrical heating element 118. When present, power transmitting element 140 should also be electrically insulated from heat conducting element 130. In the depicted implementation, an additional insulating sleeve 134 is provided to this end. Insulating sleeve 134 can for example be formed from a ceramic or other electrically insulating and temperature resistant material, such as suitable polymers. Advantageously, power transmitting element 140 is formed of a highly electrically conductive material in order to reduce electrical losses and the associated heating. Such heating of transmitting element 140 is advantageously reduced to reduce heating in first connection portion 112, which could affect the temperature readings of sensors 204, 206. Suitable materials include but are not limited to cold rolled steel, including DC01 (also known as 1.0330, St12 or FeP01), DC02, DC03, DC04, DC05, DC06 and DC07. Suitable materials further include but are not limited to copper and silver, as well as alloys or other material compositions including copper and silver.

Fig. 2 shows a specific implementation of the disclosed technology with tubular casing 110, heating element 118, filling material 122 and sensor assembly 200 removed, to illustrate possible geometries for heat conducting element 130 and power transmitting element 140. In some implementations, such as shown in Fig. 2, a distal portion 132 of heat conducting element 130 has a substantially round or circular cross-section, whereas a proximal portion 136 of heat conducting element 130 has a flattened cross-section, such as a rounded rectangular cross-section as shown in Fig. 2. As used herein, the terms "proximal" and "distal" indicate a relative position within tubular casing 110, wherein a "proximal" element is closer to one of the ends of tubular casing 110 than a "distal" element. In some implementations, such as shown in Fig. 2, proximal portion 136 optionally extends radially away from the central longitudinal axis of tubular casing 110, providing an off-center contact region 137 for contacting board 201 of sensor assembly 200. As further detailed elsewhere herein, such an off-center contact region 137 may advantageously allow to position second sensor 204 off-center, i.e. radially closer to tubular casing 110, thereby reducing the distance over which heat needs to be transferred from casing 110 to second sensor 204.

In some implementations, such as shown in Fig. 2, a distal portion 142 of power transferring element 140 is substantially tubular, enclosing optional insulating sleeve 134 therein. In some implementations, such as shown in Fig. 2, distal portion 142 has a constant cross-section over its length. In other implementations, such as shown in Fig. 3, distal portion 142 has a proximal necked-down portion 143 of reduced diameter. In some implementations, such as shown in Fig. 2, a proximal portion 144 of power transferring element 140 is substantially flat. In other implementations, such as shown in Fig. 6a, proximal portion 144 is also at least partially tubular, such as C-shaped, to at least partially enclose portions of sensor assembly 200.

Alternatively or additionally to insulating material 150, different portions of sensor assembly 200 can be enclosed in different material portion having different thermal properties, in order to improve the accuracy of the temperature readings of sensors 204, 206. In some implementations, such as shown in Fig. 6a and 6b, a portion of circuit board 201 on which first sensor 204 is positioned is enclosed in a first electrically insulating material 210 having a first thermal conductivity. Alternatively or additionally, a portion of circuit board 201 on which second sensor 206 is positioned is enclosed in a second electrically insulating material 212 having a second thermal conductivity. In some implementations, first material 210 is configured as thermal insulation for reducing heat flow, in particular radial heat flow, from tubular casing 110 and thus the surrounding medium, to first sensor 204. Alternatively or additionally, second material 212 is configured to facilitate heat flow, in particular radial heat flow, from tubular casing 110 and thus the surrounding medium, to second sensor 206. When both are present, it is particularly advantageous that the first thermal conductivity is less than the second thermal conductivity. Both first and second materials 210 and 212 can for example be epoxy resins. In some implementations, first and second materials 210 and 212 are made from different materials such as epoxy resins with different thermal conductivities. In other implementations, first and second materials 210 and 212 comprise the same material, such as the same epoxy resin, with selective or different filler materials for tailoring the thermal conductivity as desired. For example, second material 212 may be a suitable resin, such as an epoxy resin, with metal or ceramic particulates as filler. Ceramic particulates may be preferably due to their electric insulation properties. Suitable materials as fillers include but are not limited to any of the ceramics or metals disclosed elsewhere herein. Alternatively or additionally, second material 212 comprises a portion 213 which is provided in direct contact with tubular casing 110, thereby enhancing thermal contact between the surrounding medium and second sensor 206. Alternatively or additionally, the thermal conductivity of the first and/or second materials is adjusted by controlling content and/or distribution of a crystalline phase of a resin, preferably a thermoset resin.

Resins suitable for first and/or second electrically insulating materials generally include but are not limited to thermoset resins, which may or may not be curable and thermally conducting, while electrically isolating and preferably with sufficient thermal durability and/or good fluidity (low viscosity) for pouring. Suitable resins - in addition to epoxy - particularly include polyurethane (PU) resins, silicone resins, acrylic resins, phenolic resins including phenol formaldehyde (PF) resins, and polyester (PE) resins. In other configurations, first and/or second electrically insulating materials are provided in the form of a grease, preferably with sufficient thermal durability and/or good fluidity (low viscosity) for pouring.

PU resins are versatile and can be flexible or hard, depending on the formulation. They may offer good resistance to abrasion and chemical influences. Silicone resins are temperature-resistant, flexible and provide excellent electrical insulation. They may be resistant to moisture and well suited for use in harsh environments. Acrylic resins offer good weathering resistance, high clarity and good electrical insulation. They are less flexible than silicones, but harder. Phenolic resins are extremely hard and heat-resistant, but less flexible. They offer high mechanical strength and excellent electrical insulation. PE resins are inexpensive, easy to process and offer good chemical resistance. However, they are more brittle than PU resins.

In some implementations, such as shown in Figs. 6a and 6b, first and second materials 210 and 212 are in direct contact with each other. Alternatively or additionally, first material 210 is located distally from second material 212, providing additional thermal insulation of second sensor 206 from heated portion 112. In some implementations, such as shown in Fig. 7, first and second materials 210 and 212 are not in direct contact. Optionally, such implementations are combined with split circuit board 201 discussed with reference to Fig. 5. In some implementations, such as shown in Fig. 7, first material 210 optionally covers all of first board portion 207. Alternatively or additionally, second material 212 optionally covers all of second board portion 203. In some implementations, a section of optional third material 240 covering split 205 separates first and second material 210, 212.

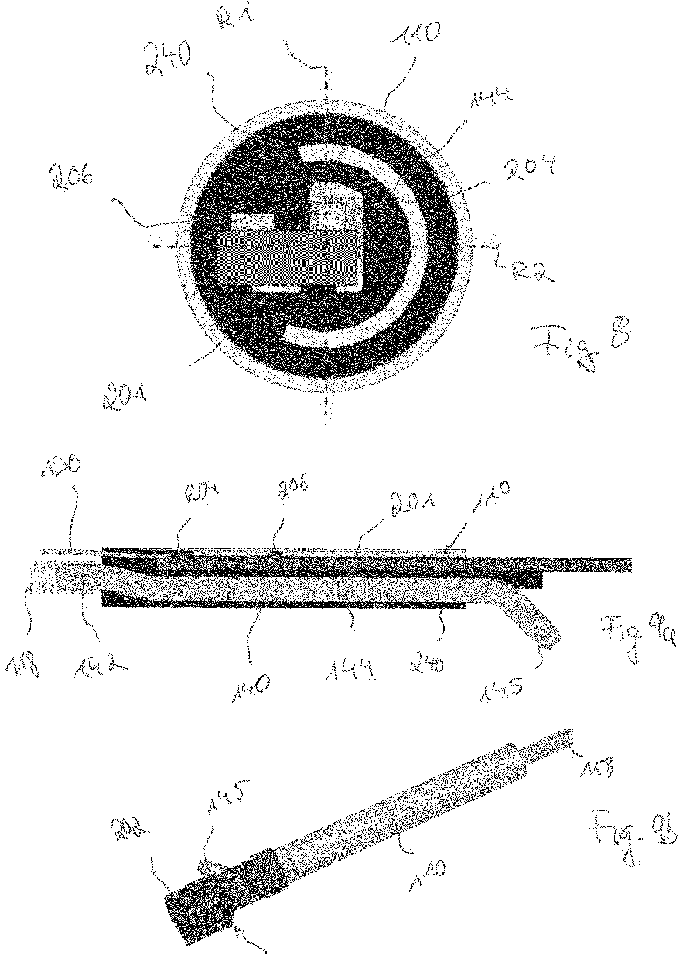

Further optional measures for reducing a difference between the temperatures readings of the temperature sensors 204, 206, and the respective temperatures to be determined, are detailed with reference to Fig. 8 providing a cross-sectional view of first connection portion 112 in a plane perpendicular to the longitudinal axis of tubular casing 110. For reference, two perpendicular radial axes R1 and R2 are indicated in Fig. 8. The longitudinal axis of tubular casing 110 is located where axes R1 and R2 intersect. In the depicted configuration, axis R1 can also be considered the thickness direction of board 201, as board 201 is arranged in plane with axis R2.

In some implementations, such as shown in Fig. 8, second sensor 206 is positioned radially closer to tubular casing 110 than first sensor 204. This can be achieved in various ways, including but not limited to an off-center placement of sensor assembly 200 within casing 110. As can be inferred from Fig. 8, instead of being arranged symmetrical with respect to axis R1, board 201 is shifted in direction of R2 to position second sensor 206 closer towards casing 110. In some implementations, such as shown in Fig. 8, power transmitting element 140 is not in direct contact with any portion of sensor assembly 200. In particular implementations, such as shown in Fig. 8, proximal portion 144 of transmitting element 140 is C-shaped and oriented so as to surround a portion of board 201 on which first sensor 204 is positioned.

In other implementations, such as shown in Figs. 9a and 9b, board 201 is radially offset in thickness direction R1, thereby moving in particular second sensor 206 closer to tubular casing 110, and optionally in direct contact with casing 110. Alternatively or additionally, heat conducting element 130 is positioned radially outside of coil-like heating element 118, i.e. between heating element 118 and tubular casing 110. Such configurations may for example allow to dispense with additional insulating sleeve 134. Alternatively or additionally, such configurations may simplify the design of power transmitting element 140, which can optionally be cylindrical as shown in Figs. 9a and 9b. A portion 145 extending proximally outside of casing 110 can provide a connector to an external power supply. Portion 145 is optionally bent so as to extend at least partially radially away from the central longitudinal axis of casing 110, facilitating placement of a plug 242 for receiving a connector to establish a connection between pins 202 and control circuitry of the household appliance.

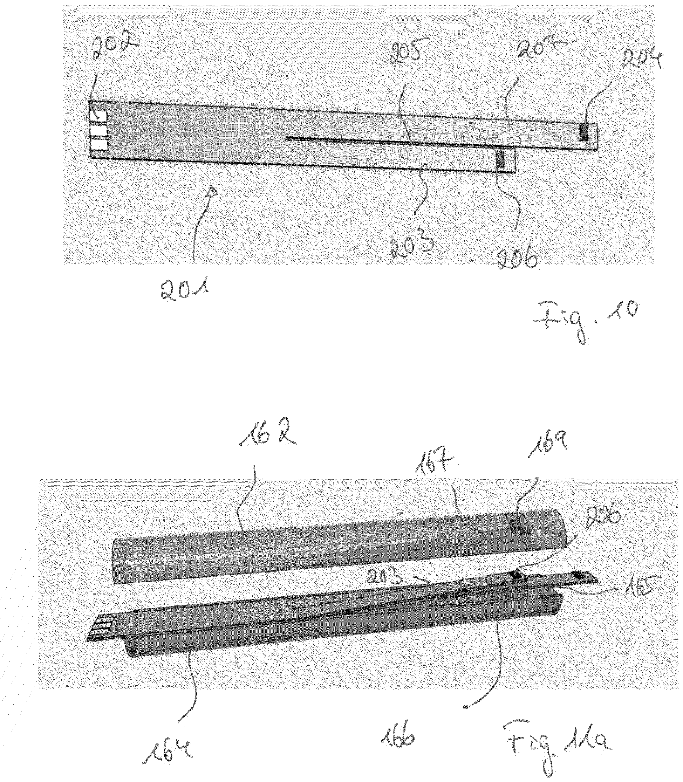

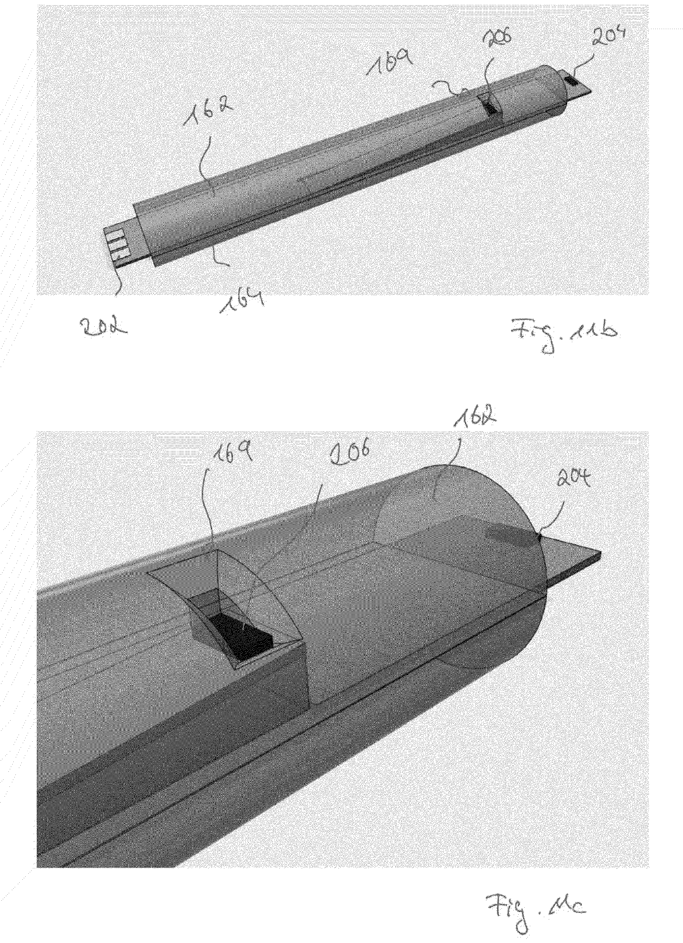

Further optional implementations in particular of circuit board 201 are discussed with reference to Figs. 10-11c. Circuit board 201 shown in Fig. 10 corresponds to the split board discussed elsewhere herein. Such a split board can optionally be used with a specially adapted capsule 160 having cover portion 162 and carrier portion 164, as shown for example in Figs. 11a-c. To position second sensor 206 radially closer to tubular casing 110, carrier portion 166 provides a ramp 166 extending out of plane of planar portion 165. Second board portion 203 is positioned on ramp 166, thereby extending out of plane of planar portion 165 and radially closer to tubular casing 110. Cover portion 162 has a correspondingly shaped recess 167, for receiving second board portion 203 and ramp 166 therein. Alternatively or additionally, cover portion 162 comprises a window portion 169 for receiving second sensor 206. Window portion 169 provides an opening, leaving sensor 206 uncovered from covering portion 162. Thereby, sensor 206 can be put in direct contact with tubular casing 110. Alternatively, window portion 169 can be filled with a thermally conductive material, such as second material 212 discussed elsewhere herein.

As mentioned above, some implementations of sensor assemblies according to the disclosed technology lack a separate circuit board. Instead, sensors and circuitry of the sensor assembly are deposited directly on an electrically insulating material situated between the power transmitting element and the sensor assembly and providing galvanic separation between the sensor assembly and the power transmitting element. Such a design can also be referred to as a molded interconnect device or mechatronic integrated device (MID). Specific implementations of this aspect of the disclosed technology are detailed hereafter with reference to Figs. 13a and 13b.

Fig. 13a selectively shows sensor assembly 200 and power transmitting element 140 in a perspective view to illustrate the MID design. Particularly heat conducting element 130 and tubular casing 110 are omitted from view for visual clarity. Fig. 13b provides a longitudinal cross section of the same elements. The aspect is of course not limited to the specific example shown in Figs. 13a and 13b. As can particularly be inferred from Fig. 13b, power transmitting element 140 is at least partially enclosed by electrically insulating material 150/240 described elsewhere herein. Instead of on a circuit board as in other aspects, circuitry 209 of sensor assembly 200, including first and second temperature sensors 204, 206 as well pins 202, is provided directly on electrically insulating material 150/240. In other words, it is advantageously made use of the electrically insulating properties of insulating material 150/240 to dispense with the circuit board, providing for a more compact design.

In some implementations, such as illustrated in Fig. 13b, the MID design can also advantageously provide for increased flexibility in sensor placement. For example, electrically insulating material 150/240 may be configured to position second sensor 206 radially closer to tubular casing 110 (not shown in Figs. 13a, b) than first sensor 204. Possible benefits of such positioning have already been described elsewhere herein. In the depicted implementation, electrically insulating material 150/240 comprises a radial protrusion 151 on which second sensor 206 is placed. Other configurations are possible, including where electrically insulating material 150/240 comprises a recess in which first sensor 204 is placed. Recesses and protrusions may of course also be combined. The effect of recesses and/or protrusions is illustrated in Fig. 13b, where dotted lines indicate respective radial planes P1 and P2, in which first and second sensors 204, 206 are positioned, respectively. First plane P1 of first sensor 204 is closer to the central longitudinal axis, i.e. has radial distance to tubular casing 110 (not shown in Figs. 13a, b), than second plane P2 of second sensor 206.

Various manufacturing methods are available for providing circuitry 209 of sensor assembly 200, including first and second temperature sensors 204, 206 as well pins 202, directly on electrically insulating material 150/240. These methods include but are not limited to hot stamping and laser direct structuring (LDS). Hot stamping is a simple, fully additive process in which a surface-modified metal foil is applied to the injection molded part (electrically insulating material 150/240) by embossing. It is cost-effective, but only suitable for simple shapes. The LDS process is particularly advantageous for the three-dimensional design of conductor paths on a thermoplastic material that contains laser-activated metal connections. It is highly flexible and allows fine conductor paths that can also be used for prototypes.

In some implementations an optional further (or fourth) electrically insulating material 260 partially encapsulates sensor assembly 200, electrically insulating material 150/240 and/or power transmitting element 140. Electrically insulating material 260 can comprise any of the materials disclosed elsewhere herein for the first, second and third electrically insulating materials. Electrically insulating material 260 can advantageously facilitate mounting and/or positioning of the assembly within tubular casing 110 (not shown in Figs. 13a, b).

As mentioned above, some implementations of sensor assemblies according to the disclosed technology comprise a circuit board which is not a rigid PCB. Instead, in some implementations, the circuit board is provided in the form of a flexible foil. Specific implementations of this aspect of the disclosed technology are detailed hereafter with reference to Figs. 14a and 14b. The aspect is of course not limited to the specific example shown in Figs. 14a and 14b.

Flexible foils for forming a circuit board are preferably made from polyimide, although other materials may be employed, including but not limited to such suitable for high frequency circuit boards, which are typically formed from hydrocarbon-ceramic-laminates or from polytetrafluoroethylene (PTFE). In some implementations, a thickness of the flexible foil is around 10 µm, around 15 µm, around 20 µm, around 25 µm, or around 30 µm. On the flexible foil, electrically conductive material, such as copper, is deposited to form circuitry 209.

Fig. 14a shows a partial cross-sectional view of an implementation of this aspect, with Fig. 14b providing a different perspective view of the same elements. In the depicted implementation, foil 211 comprises an optional portion 215 carrying first sensor 204 on its top surface, with a bottom surface of portion 215 being in direct contact with a portion of power transmitting element 140. Thus, sensor 204 provides a measurement indicative of a temperature of power transmitting element 140, which is used as a surrogate for a temperature of the heating element 118. Preferably, this allows to omit a separate heat conducting element 130. Flexible foils may advantageously exhibit high dielectric strength and good thermal conductivity, providing for galvanic separation between circuitry 209 - especially sensor 204 - while at the same time allowing an accurate temperature reading at sensor 204.

Optionally, a further optional portion 217 carrying second sensor 206 is separated from power transmitting element 140, preferably by material 150/240 described elsewhere herein. This optional separation may advantageously reduce heat transfer from power transmitting element 140 to second sensor 206, and thus measurement errors for the temperature of the surrounding medium.

### Heated pumps

Specific aspects and implementations of heated pumps according to the disclosed technology are detailed hereafter with reference to Figs. 12a and 12b, which show a particular configuration of a heated pump 1000 in perspective views, with elements of pump 1000 removed for illustration in Fig. 12b. As will become clearer from the following description, heated pumps according to the disclosed technology are not limited to the specific examples depicted in Figs. 12a and 12b. In particular, it is not necessary that heated pumps according to the disclosed technology comprise all elements depicted in or described in conjunction with Figs. 12a and 12b, or that such elements - if present - are provided in the exact configuration and/or dimensions depicted in or described in conjunction with Figs. 12a and 12b. Moreover, even though depicted with a specific implementation of tubular heater 110', heated pump 1000 can be used with any of the tubular heaters and/or sensor assemblies as disclosed elsewhere herein.

In an aspect of the disclosed technology, a heated pump comprises a housing enclosing a fluid holding cavity, a tubular heater placed within the fluid holding cavity, and a pump element for pumping a fluid, such as water, between a fluid inlet and a fluid outlet provided in the housing. Further configurations may for example comprise any combination of features shown in Figs. 12a and 12b, which are discussed hereafter, and all of which are considered optional.

The specific configuration of heated pump 1000 shown in Figs. 12a and 12b comprises a housing portion 1200 with a fluid inlet 1210 and a fluid outlet 1220. Fig. 12b shows heated pump 1000 with housing portion 1200 removed to illustrate elements situated within housing 1200. In particular, a pumping element 1100 as mentioned above is positioned within a fluid holding cavity of housing portion 1200, which is situated between fluid inlet 1210 and fluid outlet 1220. A base plate 1300 encloses the fluid holding cavity from the bottom, such that inlet 1210 and outlet 1220 are the only fluid bearing openings to and from the fluid holding cavity. Any other openings which may or may not be provided in elements surrounding the fluid holding cavity, such as housing portion 1200 and base plate 1300, are sealed against fluid leakage. Housing portion 1200 can removably be attached to base plate 1300 via connection elements 1310, which in the depicted configuration are provided in the form contoured openings configured to receive corresponding bayonet lugs (not shown) provided on housing portion 1200. In other configurations, the housing may be made from a single piece, or the housing may be split in different parts in another fashion than shown in Figs. 12a and 12b.

In operation, pumping element 1100 sucks in fluid, such as water, via fluid inlet 1210 and pushes the fluid out of fluid outlet 1220. An electric motor assembly 1400 sits beneath base plate 1300, a shaft of which (not shown) extends through base plate 1300 and couples to pumping element 1100 to drive rotation thereof. In other implementations, a wet-rotor design is employed, such that no shaft and associated opening in base plate 1300 are necessary. Of course, other pumping elements than the depicted radial turbo pump may be employed. Moreover, the position and orientation of the electric motor assembly with respect to the other components of pump 1000 may differ.

As already mentioned above, tubular heater 100' is located within the fluid holding cavity of heated pump 1000. Tubular casing 110' of heater 100' forms a loop-like structure enclosing an inner portion 120 within which pumping element 1100 can be positioned, such as shown in Fig. 12b. Such a loop-like structure can therefore advantageously provide a compact, space saving arrangement of components of a heated pump.

First and second connection portions 114 and 116 extend through an opening 1230 in housing portion 1200, such that first and second connectors 124a, 124b are accessible from outside of the fluid holding cavity to connect electrical heating element 118 of tubular heater 100' to an external power supply. A sealing portion 1500 received in opening 1230 is provided to prevent fluid leakage.

Tubular heater 100' differs e.g. from tubular heater 100 shown in Figs. 1a and 1b in the configuration of its loop-like structure. Except for the differences detailed hereafter, heater 100' can take any and all configurations disclosed elsewhere herein. In particular, heater 100' can employ any and all configurations of sensor assemblies 200 described herein. In Figs. 1a and 1b, tubular casing 110 forms a single open loop, such that first and second connection portions 114 and 115 are positioned in the plane of the loop, forming opposite ends thereof. On the other hand, tubular heater 100' of Figs. 12a and 12b has a double-loop structure, with a first loop 111a on top of a second loop 111b, each extending in its own plane, and connected by a connection portion 111c passing between the planes of the respective loops 111a, 111b. Consequently, first connection portion 114 sits on top of second connection portion 116, with each of the connection portions 114, 116 situated in a respective plane of the first and second loops 111a, 111b. This configuration can advantageously allow to guide connection portions 114, 116 through a single, comparatively compact opening 1230 in the housing of heated pump 1000. Moreover, compared to a heater 100 as shown e.g. in Figs. 1a and 1b, the stacked-loop configuration of heater 100' can provide twice the heating power over the same enclosed area.

In other configurations, heater 100' comprises more than two vertically stacked loops 111a, 111b, such as two, three or four loops. Moreover, a stacked-loop heater 100' may be employed with other configurations of heated pumps 1000. In other words, usage of a stacked-loop heater 100' is not limited to the specific pump design shown in Figs. 12a and 12b.

Heated pump 1000 in any of the disclosed configurations is particularly suited for use in a household appliance, such as a washing machine or a dishwasher. Further aspects and implementations of the disclosed technology are set forth in the appended claims.

## Claims

1. Tubular heater for heating fluid in a household appliance, the tubular heater comprising:
a tubular casing (110) enclosing a heated portion and at least a first connection portion (112, 114) adjacent the heated portion;
an electrical heating element (118) disposed within the heated portion of the tubular casing (110);
a power transmitting element (140) extending between the heated portion and the first connection portion (112, 114) for transmitting electrical power from an external power source to the electrical heating element (118);
a sensor assembly (200, 200p) disposed within the first connection portion (112, 114) of the tubular casing (110) and comprising at least a first temperature sensor (204); and
a heat conducting element (130) provided in thermal contact with the first temperature sensor (204) and extending from the first connection portion (112, 114) into the heated portion, wherein the heat conducting element (130) is electrically insulated from the electrical heating element (118) and the power transmitting element (140).

2. The tubular heater of claim 1, wherein the sensor assembly (200, 200p) is configured to provide a first temperature reading indicative of a temperature of the heating element (118), and/or configured to provide a second temperature reading indicative of a temperature of a fluid surrounding the tubular heater.

3. The tubular heater of any one of claims 1 or 2, wherein the sensor assembly (200, 200p) further comprises a second temperature sensor (206) provided in thermal contact with the tubular casing (110); preferably wherein a first thermally insulating material is disposed between the first and second temperature sensors (206).

4. The tubular heater of claim 3, wherein:
the first temperature sensor (204) is positioned within the first connection portion (112, 114) at a first axial distance from the heated portion, and the second temperature sensor (206) positioned within the first connection portion (112, 114) at a second axial distance from the heated portion, the first axial distance being less than the second axial distance; and/or
the first temperature sensor (204) is positioned within the first connection portion (112, 114) at a first radial distance from the tubular casing (110), and the second temperature sensor (206) is provided at a second radial distance from the tubular casing (110), the first radial distance being greater than the second radial distance.

5. The tubular heater of any one of claims 3 or 4, wherein:
the first temperature sensor (204) is embedded in a first electrically insulating material (210) having a first thermal conductivity; and/or
the second temperature sensor (206) is embedded in a second electrically insulating material (212) having a second thermal conductivity, preferably wherein the first thermal conductivity is less than the second thermal conductivity.

6. The tubular heater of claim 5, wherein:
the first electrically insulating material (210) is in direct contact with the second electrically insulating material (212); or alternatively
the first electrically insulating material (210) and the second electrically insulating material (212) are separated by a third electrically insulating material.

7. The tubular heater of any one of claims 5 or 6, wherein:
the heat conducting element (130) is at least partially embedded within the first electrically insulating material (210); and/or
a portion of the second electrically insulating material (212) is in direct contact with the tubular casing (110).

8. The tubular heater of any one of claims 3 to 7, wherein the sensor assembly (200, 200p) comprises a circuit board (201) having a first board portion (207) on which the first temperature sensor (204) is positioned, and a second board portion (203) on which the second temperature sensor (206) is positioned, wherein the second board portion (203) extends at least partially out of plane of the first board portion (207).

9. The tubular heater of claim 8, wherein the sensor assembly (200, 200p) is positioned on an electrically insulating carrier portion, the capsule (160) providing a planar portion (165) and a ramp portion extending from the planar portion (165), wherein the first board portion (207) is disposed on the planar portion (165) and the second board portion (203) is disposed on the ramp portion.

10. The tubular heater of any one of the preceding claims, wherein the electrical heating element (118) comprises a coil portion spirally extending around a central longitudinal axis of the tubular casing (110); and wherein the heat conducting element (130) is at least partially positioned radially within or radially outside of the coil portion.

11. The tubular heater of any one of the preceding claims, wherein the first connection portion (112, 114) of the tubular casing (110) has a diameter larger than a diameter of the heated portion of the tubular casing (110).

12. The tubular heater of any one of the preceding claims, wherein the heat conducting element (130) is made from a material (122, 150, 210, 212, 240), preferably a metal or metal alloy, having a thermal conductivity of at least 5 W/(m*K), at least 10 W/(m*K), at least 15 W/(m*K), at least 20 W/(m*K), at least 30 W/(m*K), at least 40 W/(m*K), or at least 50 W/(m*K).

13. Heated pump assembly for use in a household appliance, the heated pump assembly comprising the tubular heater of any one of claims 1 to 12.

14. Household appliance comprising the tubular heater of any one of claims 1 to 12, or the heated pump assembly of claim 13.

15. Method for heating a fluid using a tubular heater, the tubular heater comprising:
a tubular casing (110) enclosing a heated portion and at least a first connection portion (112, 114) adjacent the heated portion;
an electrical heating element (118) disposed within the heated portion of the tubular casing (110); and
a heat conducting element (130) extending from the first connection portion (112, 114) into the heated portion; wherein the heat conducting element (130) is electrically insulated from the electrical heating element (118);
the method comprising the steps of:
providing electrical power from an external power source to the heating element (118);
providing a first temperature sensor (204) in the first connection portion (112, 114);
establishing thermal contact between the first temperature sensor (204) in the first connection portion (112, 114) and the heat conducting element (130); and
determining a temperature of the electrical heating element (118) using the first temperature sensor (204).
